# EUROPÄISCHE PATENTANMELDUNG

(11) **EP 0 816 391 A2**
(43) Veröffentlichungstag der Anmeldung: **07.01.1998**
(21) Anmeldenummer: 97110351.0
(22) Anmeldetag: 25.06.1997
(51) Int. Cl.: C08F 8/00, C09D 11/10

(54) **Veresterte Copolymerisate von zwei- oder mehrfach ungesättigten Kohlenwasserstoffen**

(30) Priorität: 03.07.1996 DE 19626726
(71) Anmelder: Vianova Resins GmbH, 55252 Mainz-Kastel (DE)
(72) Erfinder: Bender, Albert, Dr., 55130 Mainz (DE)

(57) **Zusammenfassung**

Modifiziertes Kohlenwasserstoffharz herstellbar durch Umsetzung von jeweils mindestens einer Verbindung aus jeder der Gruppen der A) zwei- oder mehrfach ungesättigten linearen, verzweigten oder cyclischen Kohlenwasserstoffe mit 4 bis 10 Kohlenstoffatomen sowie deren gegebenenfalls auch gemischte Oligomeren mit Polymerisationsgraden von 2 bis 10, B) Fettsäuren und Fettsäureester, C) α,β-olefinisch ungesättigte Carbonsäuren und deren Anhydriden , D) Verbindungen zweiwertiger Metalle, E) Alkohole und F) Naturharze und Naturharzsäuren, dadurch gekennzeichnet, daß die Umsetzung in mindestens zwei Stufen durchgeführt wird, wobei in der ersten Stufe mindestens eine Verbindung der Gruppe A) mit mindestens einer Verbindung aus mindestens einer der Gruppen B) und F) umgesetzt werden, und in den nachfolgenden Stufen das Reaktionsprodukt der vorigen Stufe mit jeweils mindestens einer Verbindung mindestens einer der Gruppen C), D) und E) umgesetzt wird.

## Beschreibung

Die Erfindung betrifft Kohlenwasserstoffharze aus Copolymerisaten von zwei- oder mehrfach ungesättigten linearen, verzweigten oder cyclischen Kohlenwasserstoffen mit 4 bis 10 Kohlenstoffatomen sowie deren gegebenenfalls auch gemischten Oligomeren mit Polymerisationsgraden von 2 bis 10 sowie Verfahren zu ihrer Herstellung und ihre Verwendung als Bindemittelharze in Druckfarben vorzugsweise für den Toluoltiefdruck.

Bindemittelharze für Tiefdruckfarben mit Toluol müssen den Drucken eine rasche Trocknung, einen guten Stand aufder Oberfläche des Bedruckstoffs, eine gute Scheuerfestigkeit sowie einen hohen Glanz verleihen. Dies gilt insbesondere auf nicht oder nur schwach gestrichenen und daher stark saugenden Naturpapieren.

Beispielsweise sind Verfahren bekannt, Naturharze mit polymerisierten Kohlenwasserstoffen auf C₅-Basis, die auch als Mischpolymerisate mit Maleinsäureanhydrid oder Naturharzsäuren vorliegen können, α,β-ungesättigten Dicarbonsäureeinheiten und Calciumverbindungen in Gegenwart von Essigsäure zu niederviskosen Bindemittelharzen umzusetzen, deren Viskosität als 50 %ige Lösung in Toluol vorzugsweise bei 50 bis 150 mPa·s/23 °C liegt (US-A 4,528,036, US-A 4,552,592).

Diese Verfahren haben jedoch den bekannten Nachteil, daß auf Grund der niedrigen Viskosität dieser Bindemittelharze zum Erreichen der drucktechnischen Eigenschaften festkörperreiche Farben formuliert werden müssen, die wirtschaftlich aber ungünstig sind.

Zwar besitzen diese Bindemittelharze eine ausgezeichnete Dispergierwirkung für Buntpigmente, doch ist zudem ihre Leistung in Schwarzfarben, die mit dem schlecht dispergierbaren Ruß aufgebaut sind, unbefriedigend, was sich im Glanzabfall der Farben äußert. Hier bilden sie nach dem Druck wenig elastische, dafür aber sehr spröde Farbfilme, die dann eine ungenügende Scheuerfestigkeit besitzen. Dies ist insbesondere bei den inzwischen sehr hoch gewordenen Druckgeschwindigkeiten von mehr als 20 m/s von großem Nachteil, da es wegen der erhöhten mechanischen Belastung zum Farbabrieb und zur Verschmutzung auf den Umlenkrollen der Papierbahn kommt.

Es sind auch bereits veresterte Kohlenwasserstoffharze bekannt geworden. Beispielsweise ist beschrieben, Copolymerisate aus Dicyclopentadien und Kolophonium, die bei Drücken von 0,9 MPa (9 bar) hergestellt werden, mit Phenol-Aldehyd-Kondensationsprodukten aber ohne α,β-ungesättigte Carbonsäuren und deren Anhydride in Gegenwart von Verbindungen einwertiger oder zweiwertiger Metalle zu Bindemittelharzen, die auch mit Alkoholen verestert werden können, weiterzureagieren. Diese Produkte sind aber nur für Farben für den Offsetdruck geeignet (EP-A 0 580 954, US-A 5,376,719).

Aus DE-B 25 27 719 ist auch bekannt, Cyclopentadien, α,β-äthylenisch ungesättigte Dicarbonsäuren bzw. deren Anhydride, Harzsäuren, Metallverbindungen und Alkohole miteinander zu Bindemittelharzen für Tiefdruckfarben umzusetzen.

Hierbei wird jedoch das Cyclopentadien entweder alleine zu einem Homopolymerisat oder zusammen mit wenigstens der α,β-äthylenisch ungesättigten Dicarbonsäure zu einem Copolymerisat umgesetzt. Es ist bekannt, daß diese Homopolymerisate und Copolymerisate eine starke Wärmereaktivität besitzen und sich deshalb die nachfolgenden, bei hoher Temperatur durchgeführten Folgereaktionen nur schwer beherrschen lassen. Im technischen Maßstab durchgeführte Reaktionen mit den üblichen Kesselentleerzeiten von ca. 4 bis 6 h führen deshalb zu Produkten, deren Ungleichmäßigkeit wegen der inzwischen geforderten engen Spezifikationen nicht mehr toleriert werden kann. Dies ist ein außerordentlicher Nachteil.

Ähnliches gilt auch für Produkte, die hergestellt werden durch Umsetzung von Naturharzen mit Kohlenwasserstoffharzen, die mit α,β-äthylenisch ungesättigten Dicarbonsäuren bzw. deren Anhydriden modifiziert sind, Phenol-Aldehyd-Kondensationsprodukten und Polyolen (DE-A 25 49 902).

Gleichermaßen verhalten sich Harze erhältlich durch Copolymerisation von Cyclopentadien und α,β-äthylenisch ungesättigten Carbonsäuren bzw. deren Anhydriden und Veresterung mit einwertigen Alkoholen (DE-C 24 14 558).

Beschrieben ist auch, Tallölfettsäure, Kolophonium, Styrol, Dicyclopentadien, Maleinsäureanhydrid und Resole in Gegenwart von Magnesiumverbindungen gleichzeitig in einer einstufig verlaufenden Reaktion bei hohen Temperaturen und Drücken umzusetzen. Diese Produkte können dann in einer nachgeschalteten Reaktion noch mit Alkoholen verestert werden. Diese Bindermittelharze sind für Tiefdruckfarben verwendbar (DE-A 35 31 242). Sie besitzen jedoch den Nachteil, daß damit formulierte Farben bei hohen Druckgeschwindigkeiten relativ langsam trocknen.

Zur Regulierung der Rheologie von Firnissen und Farben für den Toluoltiefdruck wird bekanntlich häufig Äthylhydroxyäthylcellulose (EHEC) verwendet. Die bereits beim Stand der Technik aufgeführten Produkte haben jedoch den Nachteil, in Kombination mit der Äthylhydroxyäthylcellulose in toluolischer Lösung unverträglich zu sein, d.h. inhomogene Gemische zu ergeben, die unbrauchbar sind.

Es bestand daher die Aufgabe, die Schwierigkeiten der bekannten Produkte bzw. der bekannten Verfahren zu überwinden, und verbesserte Bindemittelharze für Toluotiefdruckfarben zur Verfügung zu stellen, die diese Nachteile nicht aufweisen, d. h. die im Vergleich zum Stand der Technik eine verbesserte Scheuerfestigkeit und bessere Benetzungseigenschaften für Ruß aufweisen, die die Formulierung relativ festkörperarmer Farben ermöglichen und die insbesondere mit der Äthylhydroxyäthylcellulose verträglich sind.

Diese Aufgabe konnte dadurch gelöst werden, daß man zunächst zwei- oder mehrfach ungesättigte lineare, verzweigte oder cyclische Kohlenwasserstoffe mit 4 bis 10 Kohlenstoffatomen sowie deren gegebenenfalls auch gemischte Oligomere mit Polymerisationsgraden von 2 bis 10 mit Naturharzen und/oder Naturharzsäuren und/oder Fettsäuren und/oder Fettsäureestern umsetzt, und man dann gleichzeitig oder vorzugsweise in einer nachgeschalteten Reaktion die erhaltenen Copolymerisate mit α,β-ungesättigten Carbonsäuren und/oder deren Anhydriden sowie mit zweiwertigen Metallverbindungen und Alkoholen, die vorzugsweise mehrwertig sind, zur Reaktion bringt, wobei die gesamte Umsetzung gegebenenfalls in Anwesenheit von Naturharzen und Naturharzsäuren stattfindet. Die Verbesserung von Verfahren und Produkteigenschaften gegenüber dem Stand der Technik durch die getroffenen Maßnahmen war nicht vorhersehbar und ist deshalb als überraschend zu bezeichnen.

Gegenstand der Erfindung sind daher modifizierte Kohlenwasserstoffharze herstellbar durch Umsetzung von jeweils mindestens einer Verbindung aus jeder der Gruppen der
A) zwei- oder mehrfach ungesättigten linearen, verzweigten oder cyclischen Kohlenwasserstoffe mit 4 bis 10 Kohlenstoffatomen sowie deren gegebenenfalls auch gemischte Oligomere mit Polymerisationsgraden von 2 bis 10,
B) Fettsäuren und/oder Fettsäureester,
C) α,β-ungesättigte Carbonsäuren und/oder deren Anhydride,
D) Verbindungen zweiwertiger Metalle,
E) Alkohole und
F) Naturharze und/oder Naturharzsäuren.

Die modifizierten Kohlenwasserstoffharze werden vorzugsweise erhalten durch Umsetzung
- in der ersten Stufe von Verbindungen der Gruppe A) mit Verbindungen aus mindestens einer der Gruppen B) und F) und
- in der zweiten Stufe anschließende Umsetzung des Reaktionsprodukts der ersten Stufe mit Verbindungen aus jeder der Gruppen C), D) und E) und gegebenenfalls weiteren Verbindungen der Gruppe F) bei einer Temperatur von 100 bis 300 °C unter Wasserabspaltung.

Als Verbindungen der Gruppen A) bis F) finden vorzugsweise Verwendung:
A) zwei- oder mehrfach ungesättigte lineare, verzweigte oder cyclische Kohlenwasserstoffe mit 4 bis 10 Kohlenstoffatomen sowie deren gegebenenfalls auch gemischte Oligomere mit Polymerisationsgraden von 2 bis 10.
   Die betreffenden Ausgangssubstanzen brauchen keinen hohen Reinheitsgrad aufzuweisen, es können beispielsweise Fraktionen, insbesondere konzentrierte Fraktionen, verwendet werden, die beim thermischen Dimerisieren einer C₅-Fraktion entstehen, wobei diese C₅-Fraktion als Nebenprodukt bei der thermischen Zersetzung von Naphtha und entsprechenden Erdölfraktionen anfällt. Bei einer solchen Dimerisierung wird das in einer solchen Fraktion enthaltene Cyclopentadien bzw. Methylcyclopentadien in Dicyclopentadien, Dimethyldicyclopentadien, ein Dimeres aus Cyclopentadien und Methylcyclopentadien, ein Dimeres aus Cyclopentadien und Isopren, ein Dimeres aus Cyclopentadien-Piperylen und andere entsprechende dimere Substanzen umgewandelt. Bevorzugt werden Cyclopentadien, Dicyclopentadien sowie höhere Oligomere wie das Tri- und Tetramer; ebenso gemischte Oligomere von Cyclopentadien und anderen zwei- oder mehrfach ungesättigten Kohlenwasserstoffen.
   In diesen Fraktionen können noch weitere ungesättigte Monomere, wie z.B. Propylen, Buten, Butadien, Penten, Cyclopenten oder Cyclohexen enthalten sein. Auch können sogenannte C₉-Fraktionen, die als Nebenprodukt bei der Crackung von Naphtha und anderen Rohölfraktionen entstehen, enthalten sein. Diese bestehen dann beispielsweise aus Styrol, α-Methylstyrol, Vinyltoluol, Inden, Methylinden oder Mischungen davon. Demzufolge ist eine höhere Reinheit der Komponente A) nicht immer erforderlich, es ist jedoch bevorzugt, daß die Massenanteile von Cyclopentadieneinheiten in der Mischung der Komponente A) mindestens 70 % betragen.
B) tierische, pflanzliche oder durch Raffination gewonnene Fettsäuren und Fettsäureester, insbesondere in Form von vegetabilischen oder tierischen Fettsäuren und Ölen, beispielsweise Palmitin- oder Stearinsäure, vorzugsweise jedoch ungesättigte Fettsäuren wie Öl- und Tallölfettsäure, dimerisierte und trimerisierte Fettsäuren, Öle, wie Tallöl, Fettsäureglycerinester wie Baumwollsaat-, Soja-, Lein-, Holz-, Fisch-, Rizinusöl, Kokosfett, hydriertes Kokosfett,
C) α,β-äthylenisch ungesättigte Carbonsäuren oder deren Anhydride, insbesondere Fumarsäure, Maleinsäure, Maleinsäureanhydrid, Itakonsäure, Zimtsäure, Acrylsäure, Methacrylsäure,
D) zweiwertige Metallverbindungen, vorzugsweise Oxide, Hydroxide, Carbonate, Hydrogencarbonate, Acetate, Stearate, Oleate, insbesondere Magnesium, Calcium und Zink,
E) Hydroxylgruppen enthaltende Veresterungsmittel, vorzugsweise polyfunktionelle Alkohole, insbesondere bifunktionelle, beispielsweise Glykole, oder trifunktionelle, beispielsweise Trimethyloläthan, Trimethylolpropan, Glycerin, oder höherfunktionelle, beispielsweise Pentaerythrit, dimerisiertes Trimethylolpropan, dimerisiertes Pentaerythrit oder Sorbit,
F) Kolophonium, Wurzelharz, Tallharz sowie disproportioniertes oder partiell hydriertes oder dimerisiertes Naturharz beliebiger Provenienz, wobei die Naturharze oder Naturharzsäuren auch in untergeordneten Mengen weitere Terpene oder auch die bekannten Anlagerungsprodukte von α,β-äthylenisch ungesättigten Carbonsäuren oder deren Anhydride an die Naturharzsäuren enthalten können.

Die Summe der Massenanteile der Edukte aus den einzelnen Gruppen, bezogen auf die Summe der Massen aller eingesetzten Edukte (= 100 %), bei der Herstellung der erfindungsgemäßen modifizierten Kohlenwasserstoffharze betragen vorzugsweise jeweils
A) 10 bis 90, vorzugsweise 20 bis 70, insbesondere 30 bis 60 %,
B) 1 bis 90, vorzugsweise 10 bis 80, insbesondere 15 bis 70 %,
C) 0,1 bis 30, vorzugsweise 2 bis 10, inbesondere 3 bis 8 %,
D) 0,1 bis 20, vorzugsweise 1 bis 10, insbesondere 3 bis 8 %,
E) 0,1 bis 20, vorzugsweise 1 bis 10, insbesondere 3 bis 8 %,
F) 1 bis 90, vorzugsweise 10 bis 60, insbesondere 20 bis 50 %.

Die Erfindung umfaßt auch Verfahren zur Herstellung modifizierter Cyclopentadienharze, bei denen die Komponenten A) und B) und/oder F) zunächst bei einer Temperatur von 200 bis 300 °C, vorzugsweise 220 bis 270 °C, und unter einem Druck von vorzugsweise 0,1 bis 1,5 MPa (1 bis 15 bar), insbesondere 0,2 bis 1 MPa (2 bis 10 bar), miteinander zur Reaktion gebracht werden, und dann das erhaltene Polymerisat vorzugsweise drucklos mit den Verbindungen C), D) und E) und gegebenenfalls F) im Temperaturbereich von 200 bis 280 °C, vorzugsweise 220 bis 270 °C, unter Wasserabspaltung umgesetzt werden.

Zur Herstellung werden die in der Naturharzchemie üblichen Apparaturen verwendet. Sie bestehen üblicherweise aus einem Stahlkessel, der mit Wärmeträgeröl beheizt werden kann, der für Druckreaktionen ausgelegt und mit einer Dosier- und Destillationsvorrichtung sowie einem Rührwerk ausgerüstet ist.

Zunächst wird diese Apparatur mit mindestens einer der Komponenten der Gruppen B) (Fettsäure und/oder Fettsäureester) und F) (Naturharz und/oder Naturharzsäure) beschickt, wobei die verschiedenen Verbindungen einzeln oder im Gemisch vorliegen und wobei auch gegebenenfalls inerte Lösungsmittel, wie z. B. Xylol, mitverwendet werden können. Dann wird auf eine Temperatur von vorzugsweise 220 bis 270 °C erhitzt. Dann wird die Apparatur verschlossen und gegen den sich aufbauenden Druck die flüssigen Verbindungen A) so zudosiert, daß ein Druck von vorzugsweise 1,5 MPa (15 bar), insbesondere jedoch 1 MPa (10 bar), nicht überschritten wird. Nach beendeter Reaktion, die am Druckabfall erkennbar ist, wird die Apparatur gänzlich drucklos gestellt. Die hierbei entstandenen Copolymerisate weisen eine gewichtsmittlere molare Masse von 800 bis 40 000, vorzugsweise jedoch von 1 000 bis 30 000 g/mol auf.

Dann wird der Schmelze die α,β-ungesättigte Carbonsäure und/oder deren Anhydrid aus der Substanzgruppe C) sowie die zweiwertige Metallverbindung der Substanzgruppe D) und der mehrwertige Alkohol der Substanzgruppe E) und gegebenenfalls weiteres Naturharz/Naturharzsäure der Substanzgruppe F) hinzugefügt. Zweckmäßigerweise wird die Metallverbindung nicht als Feststoff, sondern in Form einer Suspension, beispielsweise mit Xylol, zugetropft. Das dabei entstehende Wasser und weitere flüchtige Anteile werden dabei abdestilliert.

In weiteren Ausführungsformen ist es auch möglich, die Komponente C) bereits vollständig oder anteilig in die Polymerisationsreaktion von A) mit B) einzubeziehen, oder auch ein Naturharz oder eine Naturharzsäure F) einzusetzen, die bereits mit der α,β-ungesättigten Carbonsäure oder deren Anhydrid modifiziert sind.

Im allgemeinen ist es nicht notwendig, den Ansätzen zur Vervollständigung der Umsetzung mit den Metallverbindungen der Substanzklasse D) Säuren hinzuzufügen.

Bei sehr hohen Konzentrationen an Metallverbindungen kann jedoch ein Säurezusatz vorteilhaft sein, um eine vollständige Umsetzung herbeizuführen, ohne daß die Schmelzeviskosität nachteilig erhöht wird. Als Säuren können vorzugsweise Carbonsäuren verwendet werden, wie beispielsweise Essigsäure, Isononansäure, Tallölfettsäure, Cyclohexancarbonsäure, Benzoesäure, Zitronensäure, Weinsäure.

Ihr Massenanteil bezogen auf die Summe aller reaktiven Komponenten liegt vorzugsweise unter 5 % bezogen auf die Gesamtmasse der eingesetzten Verbindungen A) bis F) (= 100%).

Der Fortgang der Reaktion kann zweckmäßigerweise durch die Bestimmung der Viskositätswerte in einem Lösungsmittel, wie beispielsweise Toluol, oder durch Bestimmung der Säurezahl ermittelt, und dann beim gewünschten Stadium abgebrochen werden; wobei gegebenenfalls flüchtige Anteile durch kurzzeitiges Evakuieren des Ansatzes entfernt werden.

Die erfindungsgemäßen Bindemittelharze fallen nach Abkühlen der Schmelze zunächst als Feststoff an. Die Schmelze kann jedoch durch- Zugabe von Lösungsmitteln wie Toluol oder auch Benzinfraktionen in einen Firnis überführt werden, wobei alle Übergänge von einer festen bis zu einer flüssigen Ausführung möglich sind.

Zur Bestimmung der Viskositäten werden beispielsweise toluolische Lösungen mit einem Massengehalt an gelöstem Harz von 50 % einem üblichen Rotationsviskosimeter bei 23 °C vermessen. Die Viskositäten liegen vorzugsweise in einem Bereich von 100 bis 20 000 mPa·s, insbesondere jedoch 150 bis 5 000 mPa·s. Diese Bereiche können jedoch auch über- oder unterschritten werden.

Die molare Masse der erfindungsgemäßen Harze kann durch Gelpermeationschromatographie der Harzlösungen in Tetrahydrofuran (THF) als Lösungsmittel an Polystyrolgel in einem Permeationsmeßgerät nach bekannten Methoden ermittelt werden. Die gewichtsmittlere molare Masse M_{w} der erfindungsgemäßen Harze liegt gemäß den erhaltenen Meßergebnisssen vorzugsweise bei Werten von M_{w} > 500 g/mol und ist nach oben nicht kritisch begrenzt. Besonders bevorzugt liegt M_{w} jedoch in einem Bereich von 1 000 bis 50 000 g/mol.

Die erfindungsgemäßen Harze können auch während oder nach der eigentlichen Umsetzung durch Zugabe weiterer Substanzen modifiziert werden, wie es bei der Herstellung von Druckfarbenharzen bekannt ist. Beispielsweise ist es möglich, niedermolekulare Verbindungen wie beispielsweise Kolophonium, Kolophoniumester, vegetabilische Öle, Alkydharze, Mineralöle, oder Polymere wie Kondensationsprodukte aus Phenolen und Aldehyden, wie z. B. Resole oder Novolake, Polyester, modifizierte Kohlenwasserstoffharze und Phenolharz-modifizierte Naturharzsäureester zuzugeben, um die Lösungsviskosität zu optimieren.

Es ist aber auch möglich, den Ansätzen saure Katalysatoren hinzuzufügen. Dies ist insbesondere dann interessant, wenn eine Modifizierung mit Phenolharz, Phenol oder Formaldehyd beabsichtigt ist. Als Katalysatoren seien z. B. genannt Sulfonsäuren wie Benzolmono- und - disulfonsäure, Phenolsulfonsäure, p-Toluolsulfonsäure oder Carbonsäuren wie Essig- oder Tallölfettsäure. Die Carbonsäuren können auch verwendet werden, um die Reaktion der zweiwertigen Metallverbindungen mit den Carboxylgruppen der Naturharzsäuren zu vervollständigen.

Die im Stand der Technik beschriebenen Verfahren (US-A 4,528,036, US-A 4,552,592) benötigen zwingend die Mitverwendung von Calciumverbindungen. Die ausschließliche Verwendung von Magnesium- oder Zinkverbindungen, wie sie bei Druckfarbenharzen erwünscht sein kann, ist aber nicht möglich, da trübe Harze und Harzlösungen mit unlöslichen Anteilen resultieren, die die Produkteigenschaften stark beeinträchtigen und die Bindemittelharze sogar unbrauchbar machen können. Mit Magnesium- und Zinkverbindungen aufgebaute Harze zeigen aber häufig eine sehr gute Pigmentbenetzung. Es ist ein ganz besonders großer Vorteil der Erfindung, daß sich Produkte herstellen lassen, die sowohl im Festzustand wie auch in toluolischer Lösung völlig blank sind, d.h. bei der Betrachtung mit dem unbewaffneten Auge keine sichtbare Trübung aufweisen. Sie besitzen deshalb ein ausgezeichnetes Benetzungsverhalten für die im Illustrationstiefdruck verwendeten Pigmente.

Weiterer Gegenstand der Erfindung ist die Verwendung der erfindungsgemäßen Harze als Bindemittelharze in Pigmentanreibungen und -konzentraten sowie in Druckfarben vorzugsweise für den Illustrationstiefdruck mit Toluol.

Die erfindungsgemäßen Harze weisen eine ausgezeichnete Verträglichkeit mit anderen Bindemitteln, beispielsweise mit modifizierten Naturharzsäureestern des Standes der Technik, Resinaten, Kohlenwasserstoffharzen oder Chlorkautschuk sowie der Äthylhydroxyäthylcellulose (EHEC) auf, wodurch sie breit einsetzbar sind. Besonders Produkte, die mit Sorbit verestert sind, weisen sehr gute Veträglichkeiten mit EHEC auf Die Verwendung von Sorbit, das bei der Umsetzung als Feststoff oder auch als wäßrige Lösung eingesetzt werden kann, ist daher besonders bevorzugt.

Außerdem zeichnen sie sich vorteilhaft durch einen vergleichsweise flachen Viskositätsverlauf beim Verdünnen mit Toluol aus, ihre Viskosität nimmt also auch bei steigendem Harzgehalt nur wenig zu. Diese Eigenschaft ist beim Dispergiervorgang besonders wichtig, da die Pigmente möglichst viel Harz für eine optimale Benetzung benötigen, die entstehenden Konzentrate und Anreibungen aber immer noch gut fließfähig, d. h. niedrigviskos sein sollen. Dies macht sie insbesondere auch überlegen gegenüber Bindemittelharzen des Standes der Technik, da diese ein wesentlich ungünstigeres Verdünnungsverhalten zeigen. Dieses unterschiedliche Verhalten der Bindemittelharze ist als außerordentlich überraschend zu bezeichnen.

Die Toluol enthaltenden Tiefdruckfarben werden nach den üblichen Methoden formuliert. Dazu wird das geeignete Bindemittelharz in Toluol gelöst und dieser Firnis pigmentiert oder eine vorab hergestellte Pigmentanreibung mit Toluol verdünnt. Als Zuschlagstoffe können beispielsweise Füllstoffe wie Calciumcarbonat oder grenzflächenaktive Mittel zur Verbesserung der Pigmentdispersion wie Lecithin oder Wachse zur Verbesserung der Scheuerfestigkeit, mitverwendet werden.

Weiterer Gegenstand der Erfindung ist die Verwendung der erfindungsgemäßen Harze als Bindemittelharze in Druckfarben für den Offsetdruck und den Buchdruck, wo sie überraschenderweise gleichfalls einsetzbar sind, und wo sie insbesondere in Gelform als Gelfirnisse sehr vorteilhaft verwendbar sind. Die Herstellung der Gelfirnisse erfolgt vorzugsweise durch Reaktion der Bindermittelharze mit Aluminiumverbindungen, wie z.B. Aluminiumalkoholat oder mit Acetessigester stabilisiertem Aluminiumalkoholat nach bekannten Verfahrensweisen in hochsiedendem Mineralöl. Die Gelfirnisse werden gegebenenfalls mit weiteren Bindemittelharzen, wie z.B. Phenolharz-modifizierten Kolophoniumharzen, vegetabilischen Ölen, Wachsen, Füllstoffen, Sikkativen und weiteren Zusatzstoffen vermischt und durch Pigmentierung die für den Offsetdruck und Buchdruck verwendbaren Druckfarben erhalten, die sich u.a. bei den in Druckmaschinen auftretenden Arbeitstemperaturschwankungen in einem sehr breiten Bereich weitgehend unempfindlich in ihrem Viskositätsverhalten zeigen und auch nicht unlöslich werden, was außerordentlich vorteilhaft ist.

Zur Ermittlung der Mineralölverträglichkeit bzw. der Klarlöslichkeit in Mineralöl der erfindungsgemäßen Harze werden diese jeweils bei 180 °C in standardisiertem Mineralöl (Siedebereich 240 bis 270 °C, Anilinpunkt 72 °C) zu klaren Harzlösungen mit einem Massenanteil an Harz in der Lösung von 35 % gelöst, die Lösungen auf 23 °C abgekühlt und sogleich unter Rühren bis zum Auftreten einer Trübung (Trübungspunkt) mit dem gleichen Mineralöl titriert. Das am Trübungspunkt in der Lösung vorliegende Verhältnis der Masse an Harz zur Masse an Mineralöl wird als Verträglichkeit bzw. Klarlöslichkeitsendpunkt bezeichnet. Analog dazu wird die Verträglichkeit in Leinöl bestimmt.

Wegen ihrer guten Verträglichkeit mit Aliphaten sind die erfindungsgemäßen neuen modifizierten Kolophoniumharze auch in Kombination mit niedrigsiedenden Benzinfraktionen einsetzbar, wie sie z.B. im Illustrationstiefdruck mit Benzin verwendet werden. Weiterer Gegenstand der Erfindung ist daher die Verwendung der erfindungsgemäßen Harze als Bindemittelharze in Druckfarben für den Illustrationstiefdruck mit Benzin.

Diese breite Einsetzbarkeit der neuen Verbindungen für derart unterschiedliche Druckverfahren, wie sie Offset-, Buch- und Tiefdruck darstellen, bedeutet einen ganz besonders wichtigen Vorteil und eine außerordentliche Verbesserung gegenüber den Harzen des Standes der Technik.

Die Erfindung wird durch die nachfolgenden Beispiele näher erläutert, ohne sie jedoch einzuschränken. Mengenangaben in den Beispielen in Teilen und Prozent bedeuten Massenanteile, soweit nicht anders vermerkt.

Die angegebenen Säurezahlen werden nach DIN 53 402 gemessen. Die Angabe erfolgt üblicherweise in der Einheit "mg/g". Die Säurezahl ist definiert als der Quotient der zur Neutralisation einer bestimmten Masse *m*_{B} der Probesubstanz erforderlichen Masse an Kaliumhydroxid *m*_{KOH} und der Masse der (unverdünnten) Probe *m*_{B}.

Die Lösungsviskositäten in den nachfolgenden Beispielen werden an toluolischen Lösungen mit einem Massenanteil an Harz in der Lösung von 50 % bei einer Temperatur von 23 °C bestimmt.

### Beispiel 1

In einer 3 l-Stahlapparatur werden 144 g Kolophonium auf 260 °C erhitzt. Dazu werden innerhalb 6 h 336 g technisches Dicyclopentadien mit einem Massenanteil von 80 % Cyclopentadien-Einheiten zudosiert und weitere 5 h unter Rühren bei dieser Temperatur gehalten; dabei bildet sich der zunächst auf 0,9 MPa (9 bar) gestiegene Druck auf 0,5 MPa (5 bar) zurück. Dann wird auf Normaldruck entspannt. Die durch Gelpermeationschromatographie ermittelte gewichtsmittlere molare Masse M_{w} einer Probe beträgt 700 g/mol.

Danach gibt man 480 g Kolophonium zu und rührt ein halbe Stunde nach. Dann werden 70 g Maleinsäureanhydrid während einer halben Stunde eingerührt. Schließlich werden 13 g Magnesiumoxid und 122 g Pentaerythrit in die Harzschmelze eingestreut und die Mischung solange unter Destillation flüchtiger Anteile erhitzt, bis die Säurezahl unter 50 mg/g gesunken ist. Man hält dann 5 min bei 10 kPa (100 mbar), stellt drucklos und entleert den Ansatz. Es werden 1048 g blankes Harz mit dem Erweichungspunkt 162 °C und einer Lösungsviskosität von 524 mPa·s (blanke Lösung) erhalten. Die durch Gelpermeationschromatographie ermittelte gewichtsmittlere molare Masse M_{w} beträgt 2350 g/mol.

In Mineralöl vom Siedebereich 240 bis 270 °C (Anilinpunkt 72 °C) besitzt das Harz eine Verträglichkeit von besser als 1 : 5 und in Leinöl von besser als 1 : 2.

### Beispiel 2

In einer 3 l-Stahlapparatur werden 144 g Kolophonium auf 260 °C erhitzt. Dazu werden innerhalb 6 h 336 g technisches Dicyclopentadien mit einem Massenanteil von 80 % Cyclopentadien-Einheiten zudosiert und weitere 5 h unter Rühren bei dieser Temperatur gehalten; dabei bildet sich der zunächst auf 0,9 MPa (9 bar) gestiegene Druck auf 0,5 MPa (5 bar) zurück. Dann wird auf Normaldruck entspannt.
Danach gibt man 480 g Kolophonium zu und rührt ein halbe Stunde nach. Dann werden 47 g Maleinsäureanhydrid während einer halben Stunde eingerührt. Schließlich werden 26 g Zinkoxid, 122 g Pentaerythrit und 16 g Glycerin der Harzschmelze zugegeben und die Mischung solange unter Destillation flüchtiger Anteile erhitzt, bis die Säurezahl unter 50 mg/g gesunken ist. Man hält dann 5 min bei 10 kPa (100 mbar), stellt drucklos und entleert den Ansatz. Es werden 1053 g blankes Harz mit dem Erweichungspunkt 148 °C und einer Lösungsviskosität von 105 mPa·s (blanke Lösung) erhalten. Die durch Gelpermeationschromatographie ermittelte gewichtsmittlere molare Masse M_{w} beträgt 1800 g/mol.

### Beispiel 3

In einer 3 l-Stahlapparatur werden 144 g Kolophonium auf 260 °C erhitzt. Dazu werden innerhalb 6 h 336 g technisches Dicyclopentadien mit einem Massenanteil von 80 % Cyclopentadien-Einheiten zudosiert und weitere 5 h unter Rühren bei dieser Temperatur gehalten; dabei bildet sich der zunächst auf 0,9 MPa (9 bar) gestiegene Druck auf 0,5 MPa (5 bar) zurück. Dann wird auf Normaldruck entspannt.
Danach gibt man 480 g Kolophonium zu und rührt ein halbe Stunde nach. Dann werden 70 g Maleinsäureanhydrid während einer halben Stunde eingerührt. Schließlich werden 23 g Calciumhydroxid und 122 g Pentaerythrit in die Harzschmelze eingestreut und diese solange unter Destillation flüchtiger Anteile erhitzt, bis die Säurezahl unter 50 mg/g gesunken ist. Man hält dann 5 min bei 10 kPa (100 mbar), stellt drucklos und entleert den Ansatz. Es werden 1057 g blankes Harz mit dem Erweichungspunkt 144 °C, einer Lösungsviskosität von 390 mPa·s (blanke Lösung) und einer Säurezahl von 19 mg/g erhalten.

### Beispiel 4

In einer 3 l-Stahlapparatur werden 430 g Tallölfettsäure auf 260 °C erhitzt. Dazu werden innerhalb 6 h 946 g technisches Dicyclopentadien mit einem Massenanteil von 80 % Cyclopentadien-Einheiten zudosiert und weitere 5 h unter Rühren bei dieser Temperatur gehalten; dabei bildet sich der zunächst auf 0,38 MPa (3,8 bar) gestiegene Druck auf 0,2 MPa (2 bar) zurück. Dann wird auf Normaldruck entspannt. Die durch Gelpermeationschromatographie ermittelte gewichtsmittlere molare Masse M_{w} einer Probe beträgt 4770 g/mol.

Danach gibt man 480 g Kolophonium zu und rührt ein halbe Stunde nach. Dann werden 70 g Maleinsäureanhydrid während einer halben Stunde eingerührt. Schließlich werden 23 g Calciumhydroxid und 122 g Pentaerythrit in die Harzschmelze eingestreut und diese solange unter Destillation flüchtiger Anteile erhitzt, bis die Säurezahl unter 50 mg/g gesunken ist. Man halt dann 5 min bei 10 kPa (100 mbar), stellt drucklos und entleert den Ansatz. Es werden 1864 g blankes Harz mit dem Erweichungspunkt 135 °C, einer Lösungsviskosität von 940 mPa·s (blanke Lösung) und einer Säurezähl von 19 mg/g erhalten.

### Beispiel 5

In einer 3 l-Stahlapparatur werden 120 g Kolophonium auf 260 °C erhitzt. Dazu werden innerhalb 6 h 280 g technisches Dicyclopentadien mit einem Massenanteil von 80 % Cyclopentadien-Einheiten zudosiert und weitere 5 h unter Rühren bei dieser Temperatur gehalten; dabei bildet sich der zunächst auf 0,9 MPa (9 bar) gestiegene Druck auf 0,5 MPa (5 bar) zurück. Dann wird auf Normaldruck entspannt.

Danach gibt man 400 g Kolophonium zu und rührt ein halbe Stunde nach. Dann werden 59 g Maleinsäureanhydrid während einer halben Stunde eingerührt. Schließlich werden 23 g Calciumhydroxid und 181 g Sorbit in die Harzschmelze eingestreut und diese solange unter Destillation flüchtiger Anteile erhitzt, bis die Säurezahl unter 50 mg/g gesunken ist. Man hält dann 5 min bei 10 kPa (100 mbar), stellt drucklos und entleert den Ansatz. Es werden 953 g blankes Harz mit dem Erweichungspunkt 135 °C, einer Lösungsviskosität von 140 mPa·s (blanke Lösung) und einer Säurezahl von 19 mg/g erhalten.

Zur Überprüffing der Verträglichkeit mit Äthylhydroxyäthylcellulose (EHEC) werden 10 g der 50 proz. Harzlösung in Toluol mit 10 g einer 10 proz. Lösung von EHEC in Toluol vermischt. Es wird eine blanke und homogene Lösung erhalten. Diese kann sehr gut zur Herstellung von Toluoltiefdruckfarben verwendet werden.

### Beispiel 6

In einer 2 l-Stahlapparatur werden 430 g Sojaöl auf 260 °C erhitzt. Dazu werden innerhalb 6 h 287 g technisches Dicyclopentadien mit einem Massenanteil von 80 % Cyclopentadien-Einheiten zudosiert und weitere 5 h unter Rühren bei dieser Temperatur gehalten; dabei bildet sich der zunächst auf 0,4 MPa (4 bar) gestiegene Druck auf 0,25 MPa (2,5 bar) zurück. Dann wird auf Normaldruck entspannt. Dis durch Gelpermeationschromatographie ermittelte gewichtsmittlere molare Masse M_{w} einer Probe beträgt 28 500 g/mol.

Danach gibt man 377 g Kolophonium zu und rührt ein halbe Stunde nach. Dann werden 30 g Calciumhydroxid, suspendiert in 150 g Xylol, während einer Stunde zudosiert, wobei das entstehende Wasser und weitere flüchtige Anteile abdestilliert werden. Man rührt noch eine halbe Stunde nach und dosiert anschließend während 5 min 46 g Maleinsäureanhydrid zu und nach einer weiteren halben Stunde 30 g Glycerin zu. Man rührt noch zwei weitere Stunden, hält dann 5 min bei 10 kPa (100 mbar), stellt drucklos und entleert den Ansatz. Es werden 1080 g blankes Harz mit dem Erweichungspunkt 100 °C und einer Lösungsviskosität von 235 mPa·s (blanke Lösung) erhalten.

### Beispiel 7

In einer 3 l-Stahlapparatur werden 210 g Kolophonium auf 260°C erhitzt. Dazu werden innerhalb 6 h 490 g technisches Dicyclopentadien mit einem Massenanteil von 80 % Cyclopentadien-Einheiten zudosiert und weitere 5 h unter Rühren bei dieser Temperatur gehalten; dabei bildet sich der zunächst auf 0,9 MPa (9 bar) gestiegene Druck auf 0,5 MPa (5 bar) zurück. Dann wird auf Normaldruck entspannt.

Danach gibt man 210 g Kolophonium zu und rührt ein halbe Stunde nach. Dann werden 46 g Maleinsäureanhydrid während einer halben Stunde eingerührt. Schließlich werden 20 g Magnesiumoxid und 30 g Äthylenglykol der Harzschmelze zugesetzt. Danach werden noch 30 g Tallölfettsäure zugetropft. Man erhitzt solange unter Destillation flüchtiger Anteile, bis die Säurezahl unter 50 mg/g gesunken ist. Man hält dann 5 min bei 10 kPa (100 mbar), stellt drucklos und entleert den Ansatz. Es werden 930 g blankes Harz mit dem Erweichungspunkt 135 °C, einer Lösungsviskosität von 48 mPa·s (blanke Lösung) und einer Säurezahl von 28 mg/g erhalten.

### Vergleichsbeispiel 1

Nach US-A 4,552,592 wird analog deren Beispiel 3 ein Bindemittelharz mit der Lösungsviskosität 115 mPa·s hergestellt.

### Vergleichsbeispiel 2

Nach US-A 4,552,592 wird analog deren Beispiel 3 ein Bindemittelharz hergestellt, bei dem der Calciumhydroxid-Einstand durch die äquivalente Menge Magnesiumhydroxid ersetzt wird. Es wird ein trübes Harz erhalten, das sich nicht vollständig in Toluol lösen läßt.

### Vergleichsbeispiel 3

Nach DE-B 25 27 719 wird analog deren Beispiel 8 ein Bindemittelharz hergestellt. Zur Überprüfung der Verträglichkeit mit Äthylhydroxyäthylcellulose (EHEC) werden 10 g einer 50 proz. Harzlösung in Toluol mit 10 g einer 10 proz. Lösung von EHEC in Toluol vermischt. Es wird ein trübes, inhomogenes Gemisch erhalten, bei dem nach ca. 2 h Phasentrennung eintritt. Das Gemisch kann nicht zur Herstellung von Toluoltiefdruckfarben verwendet werden.

### Vergleichsbeispiel 4

Nach DE-A 25 29 902 wird analog deren Beispiel 10 ein Bindemittelharz hergestellt. Zur Überprüfung der Verträglichkeit mit Äthylhydroxyäthylcellulose (EHEC) werden 10 g einer 50 proz. Harzlösung in Toluol mit 10 g einer 10 proz. Lösung von EHEC in Toluol vermischt. Es wird ein trübes, inhomogenes Gemisch erhalten, bei dem nach ca. 2 h Phasentrennung eintritt. Das Gemisch kann nicht zur Herstellung von Toluoltiefdruckfarben verwendet werden.

### Vergleichsbeispiel 5

Nach DE-A 35 31 242 wird analog deren Beispiel 1 ein Bindemittelharz hergestellt. Zur Überprüfung der Verträglichkeit mit Äthylhydroxyäthylcellulose (EHEC) werden 10 g einer 50 proz. Harzlösung in Toluol mit 10 g einer 10 proz. Lösung von EHEC in Toluol vermischt. Es wird ein trübes, inhomogenes Gemisch erhalten, bei dem nach ca. 2 h Phasentrennung eintritt. Das Gemisch kann nicht zur Herstellung von Toluoltiefdruckfarben verwendet werden.

### Anwendungstechnisches Beispiel

Nach üblichen Verfahren werden jeweils aus den Bindemittelharzen des Beispiels 1 (Farbe A), des Beispiels 4 (Farbe B) sowie des Vergleichsbeispiels 1 (Farbe C) nach den üblichen Methoden durch Dispergieren einer Mischung von Bindemittelharz, Ruß ® Printex 300 (Degussa AG) und Toluol Farben hergestellt, die den gleichen Pigmentgehalt und die gleiche Druckviskosität (Auslaufzeit von 22 s im 3 mm DIN-Auslaufbecher) aufweisen. Es resultieren Farben folgender Zusammensetzung:

| Massenanteile in % | Farbe A | Farbe B | Farbe C |
|---|---|---|---|
| Harz | 25 | 24 | 31 |
| Ruß | 8 | 8 | 8 |
| Toluol | 67 | 68 | 61 |

Mit diesen Farben für den Illustrationstiefdruck wird im Tiefdruckverfahren stark saugendes Naturpapier bedruckt.

Der Glanz der Andrucke, der für ein gutes drucktechnisches Ergebnis möglichst hoch sein sollte, wird sodann mit dem Laborreflektometer nach Lange bei einem Einstrahlwinkel von 60° gemessen.

Die Scheuerfestigkeit der Druckfilme wird mit dem Gerät Prüfbau-Quadrant bei 50 Hüben und einer Belastung von 600 g bestimmt und mit Noten von 1 bis 6 bewertet. 1 bedeutet dabei eine sehr gute, 6 eine sehr schlechte Scheuerfestigkeit.

Das Durchschlageverhalten wird visuell beurteilt. Dabei bedeutet die Note 1 kein Durchschlagen auf die Rückseite des Bedruckstoffs und die Note 6 maximales Durchschlagen.

| | Farbe A | Farbe B | Farbe C |
|---|---|---|---|
| Glanz in % | 18,5 | 18 | 14 |
| Scheuerfestigkeit | 2 | 2 | 5 |
| Durchschlagen | 2 | 2 | 4 |

Die erfindungsgemäßen Produkte erweisen sich bezüglich Dispergierwirkung für Ruß, dem Durchschlageverhalten und der daraus resultierenden Glanzentwicklung der Farben wie auch der Scheuerfestigkeit trotz des niedrigeren Harzgehalts dem Bindemittelharz des Standes der Technik überlegen.

## Patentansprüche

1. Modifiziertes Kohlenwasserstoffharz herstellbar durch Umsetzung von jeweils mindestens einer Verbindung aus jeder der Gruppen der
A) zwei- oder mehrfach ungesättigten linearen, verzweigten oder cyclischen Kohlenwasserstoffe mit 4 bis 10 Kohlenstoffatomen sowie deren gegebenenfalls auch gemischte Oligomeren mit Polymerisationsgraden von 2 bis 10,
B) Fettsäuren und/oder Fettsäureester,
C) α,β-olefinisch ungesättigten Carbonsäuren und/oder deren Anhydriden ,
D) Verbindungen zweiwertiger Metalle
E) Alkohole und
F) Naturharze und/oder Naturharzsäuren,
dadurch gekennzeichnet, daß die Umsetzung in mindestens zwei Stufen durchgeführt wird, wobei in der ersten Stufe mindestens eine Verbindung der Gruppe A) mit mindestens einer Verbindung aus mindestens einer der Gruppen B) und F) umgesetzt werden, und in den nachfolgenden Stufen das Reaktionsprodukt der vorigen Stufe mit jeweils mindestens einer Verbindung mindestens einer der Gruppen C), D) und E) umgesetzt wird.

2. Modifiziertes Kohlenwasserstoffharz nach Anspruch 1, dadurch gekennzeichnet, daß die Summe der Massenanteile von Edukten aus den einzelnen Gruppen, bezogen auf die Summe der Masse aller Edukte, für die Gruppe
A) 10 bis 90 %,
B) 1 bis 90 %,
C) 0,1 bis 30 %,
D) 0,1 bis 20 %,
E) 0,1 bis 20 %, und
F) 1 bis 90 % betragen,
wobei die Summe der Massenanteile aller Edukte 100 % beträgt.

3. Modifiziertes Kohlenwasserstoffharz nach Anspruch 1, dadurch gekennzeichnet, daß als Verbindung der Substanzgruppe B) ein Fettsäureglycerinester eingesetzt wird.

4. Modifiziertes Kohlenwasserstoffharz nach Anspruch 1, dadurch gekennzeichnet, daß als Verbindung der Substanzgruppe B) eine Fettsäure eingesetzt wird.

5. Modifiziertes Kohlenwasserstoffharz nach Anspruch 1, dadurch gekennzeichnet, daß als Metallverbindung D) eine Magnesiumverbindung eingesetzt wird.

6. Modifiziertes Kohlenwasserstoffharz nach Anspruch 1, dadurch gekennzeichnet, daß als Metallverbindung D) eine Zinkverbindung eingesetzt wird.

7. Modifiziertes Kohlenwasserstoffharz nach Anspruch 1, dadurch gekennzeichnet, daß als Metallverbindung D) eine Calciumverbindung eingesetzt wird.

8. Modifiziertes Kohlenwasserstoffharz nach Anspruch 1, dadurch gekennzeichnet, daß als Verbindung der Substanzgruppe E) mindestens eine Verbindung ausgewählt aus der Gruppe Äthylenglykol, Glycerin, Pentaerythrit und Sorbit eingesetzt wird.

9. Modifiziertes Kohlenwasserstoffharz nach Anspruch 1, dadurch gekennzeichnet, daß die Umsetzung der Verbindungen der Gruppe D) in Gegenwart von Carbonsäuren erfolgt.

10. Modifiziertes Kohlenwasserstoffharz nach Anspruch 1, dadurch gekennzeichnet, daß seine Lösungsviskosität, gemessen an toluolischen Lösungen mit einem Massenanteil an Harz in der Lösung von 50 % bei einer Temperatur von 23 °C, im Bereich von 150 bis 5 000 mPa·s liegt.

11. Modifiziertes Kohlenwasserstoffharz nach Anspruch 1, dadurch gekennzeichnet, daß seine durch Gelpermeationschromatographie an Polystyrolgel ermittelte gewichtsmittlere molare Masse M_{w} im Bereich von 1 000 bis 50 000 g/mol liegt.

12. Verfahren zur Herstellung von modifizierten Kohlenwasserstoffharzen nach Anspruch 1, dadurch gekennzeichnet, daß die Umsetzung in mindestens zwei Stufen durchgeführt wird, wobei in der ersten Stufe mindestens eine Verbindung der Gruppe A) mit mindestens einer Verbindung aus mindestens einer der Gruppen B) und F) umgesetzt werden, und in den nachfolgenden Stufen das Reaktionsprodukt der vorigen Stufe mit jeweils mindestens einer Verbindung mindestens einer der Gruppen C), D) und E) umgesetzt wird.

13. Verfahren nach Anspruch 12, dadurch gekennzeichnet, daß die Umsetzung in zwei Stufen durchgeführt wird, wobei in der ersten Stufe mindestens eine Verbindung der Gruppe A) mit mindestens einer Verbindung aus mindestens einer der Gruppen B) und F) umgesetzt werden, und in der zweiten Stufe das Reaktionsprodukt der ersten Stufe mit jeweils mindestens einer Verbindung mindestens einer der Gruppen C), D) und E) umgesetzt wird.

14. Verfahren nach Anspruch 12, dadurch gekennzeichnet, daß in der ersten Stufe jeweils mindestens eine Verbindung aus jeder der beiden Gruppen B) und F) eingesetzt wird.

15. Verfahren nach Anspruch 12, dadurch gekennzeichnet, daß bei der ersten Stufe der Umsetzung mindestens eine Verbindung aus einer der Gruppen B) und F) in einem für Druckreaktionen ausgelegten Reaktionsgefäß vorgelegt und auf eine Temperatur von 220 bis 270 °C erwärmt werden, und anschließend mindestens eine Verbindung aus der Gruppe A) so zudosiert wird, daß der Druck im Reaktionsgefäß 1,5 MPa (15 bar) nicht überschreitet, und daß nach der am Druckabfall erkennbaren Beendigung der Reaktion in der zweiten Stufe jeweils mindestens eine Verbindung aus jeder der Gruppen C), D) und E) einzeln oder gemeinsam zugefügt werden und im Temperaturbereich von 200 bis 280 °C mit dem Produkt der ersten Stufe umgesetzt werden.

16. Verfahren zur Herstellung von modifizierten Kohlenwasserstoffharzen nach Anspruch 12, dadurch gekennzeichnet, daß in mindestens einer der auf die erste Stufe folgenden weiteren Stufen zusätzlich mindestens eine Verbindung aus der Gruppe F) zusätzlich eingesetzt wird.

17. Verwendung der modifizierten Kohlenwasserstoffharze nach Anspruch 1 in Pigmentanreibungen und Pigmentkonzentraten.

18. Verwendung der modifizierten Kohlenwasserstoffharze nach Anspruch 1 in Druckfarben.

19. Verwendung der modifizierten Kohlenwasserstoffharze nach Anspruch 1 in Druckfarben für den Tiefdruck mit Toluol.

20. Verwendung der modifizierten Kohlenwasserstoffharze nach Anspruch 1 in Druckfarben für den Tiefdruck mit Benzin.

21. Verwendung der modifizierten Kohlenwasserstoffharze nach Anspruch 1 in Druckfarben für den Offsetdruck.
